# DEMANDE DE BREVET EUROPEEN

(11) **EP 3 264 812 A1**
(43) Date de publication de la demande: **03.01.2018**
(21) Numéro de dépôt: 16305780.5
(22) Date de dépôt: 28.06.2016
(51) Int. Cl.: H04W 8/20, H04W 8/18

(54) **PROCÉDÉ DE MISE À JOUR D'ÉLÉMENTS DE SÉCURITÉ, PLATE-FORME OTA ET ÉLÉMENT DE SÉCURITÉ CORRESPONDANTS**

(71) Demandeur: GEMALTO SA, 92190 Meudon (FR)
(72) Inventeur: SOLE SALA, Cyril, 13881 GEMENOS cedex (FR); CORTES VARA, Jorge, 13881 GEMENOS cedex (FR)

(57) **Abrégé**

L'invention concerne notamment un procédé de mise à jour d'éléments de sécurité (30) coopérant avec des terminaux de télécommunications, les mises à jour étant effectuées par une plate-forme OTA (31) sur la base de requêtes formulées par les éléments de sécurité (30), les éléments de sécurité (30) transmettant à la plate-forme OTA (31) des PSK-ID, le procédé consistant à transmettre des élément de sécurité (30) à la plate-forme OTA (31) des identités IDs définissant un ordre de priorité de demande de prise en compte de leurs requêtes par la plate-forme OTA (31).

## Description

La présente invention concerne le domaine des télécommunications et plus précisément celui de l'administration à distance d'éléments de sécurité, tels que des UICCs (Universal Integrated Circuit Cards) coopérant avec des terminaux, par exemple des terminaux portables tels que des téléphones, des smartphones, des PDAs ou des ordinateurs. Les éléments de sécurité peuvent également se présenter sous la forme de circuits intégrés dans des machines, tel que dans le domaine du M2M (Machine to Machine en anglais). Ils ne sont pas nécessairement physiquement connectés au terminaux, mais peuvent communiquer avec ceux-ci par une liaison courte distance où un élément de sécurité est déporté et communique par un canal courte distance avec le terminal (Bluetooth ou Wifi par exemple).

Une telle administration d'éléments de sécurité est classiquement réalisée par OTA (Over The Air en anglais - par voie radio en français) afin de mettre à jour ou installer des données ou des programmes dans les éléments de sécurité. Une administration de ce genre peut utiliser les protocoles http (HyperText Transfer Protocol en anglais - protocole de transfert hypertexte en français) ou SMS (Short Message Service en anglais - Service de Messages courts en français).

Il existe deux manières pour administrer des éléments de sécurité :
La première consiste à transmettre à partir d'une plateforme OTA des données ou des programmes à des éléments de sécurité ciblés, par exemple lors de campagnes de mise à jour. Ce type d'administration est appelé « push » en anglais et est basé sur de la transmission en mode SMS. Le problème est que cette méthode ne convient pas dans les réseaux de nouvelle génération tel que les réseaux purs LTE qui ne supportent pas le SMS (ils sont entièrement http). De plus, les administrations de type RAM ou RFM par http ont été mises en place pour éviter des protocoles non fiables tels que le SMS.
La seconde consiste à interroger, par exemple régulièrement ou à l'occurrence d'un événement, la plateforme OTA pour connaître l'existence de mises à jour disponibles. Cette interrogation est à l'initiative de l'élément de sécurité et est appelée « polling » ou « pull » en anglais (l'élément de sécurité va voir si la plateforme OTA a quelque chose à lui transmettre). L'interrogation s'effectue via le protocole http.

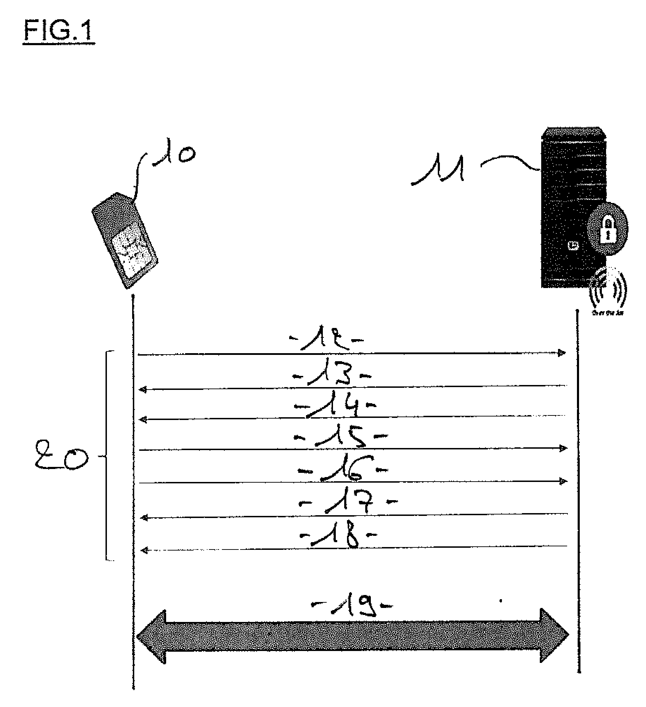

La figure 1 représente un système d'administration d'éléments de sécurité basé sur ce principe.

Dans cette figure, un élément de sécurité 10 est administré par une plate-forme OTA 11 ou encore serveur.

L'élément de sécurité 10 coopère avec un terminal de télécommunications non représenté.

Le procédé débute par une étape 12 consistant à interroger, à l'initiative de l'élément de sécurité 10, la plateforme OTA 11, pour savoir si elle a des données ou des programmes à lui transmettre. Tous les échanges représentés s'effectuent selon le protocole SCP 81.

Lors d'une étape 13, le serveur 11 répond à l'élément de sécurité 10 qu'il a bien reçu sa demande et confirme cette réception lors d'une étape 14.

A l'étape 15, l'élément de sécurité 10 envoie un PSK-ID au serveur 11. Un PSK-ID réfère une clé (PSK) préétablie partagée entre l'élément de sécurité 10 et le serveur 11, associée à une identité (ID). Grâce à cette clé PSK, le serveur 11 reconnaît l'élément de sécurité 10.

On se réfèrera avantageusement à la recommandation IETF disponible à l'adresse suivante : https://tools.ietf.org/html/rfc4279.

Lors d'une étape 16, l'élément de sécurité 10 choisit une suite de chiffrement, par exemple une suite AES 128 ou 3DES.

Le serveur 11 accepte, lors d'une étape 17, la suite de chiffrement proposée et, lors d'une étape 18, finalise l'établissement du canal de communication (« handshake » en anglais) avec l'élément de sécurité 10.

L'étape 19 consiste alors à échanger des données sur le canal TLS-PSK sécurisé ainsi établi. L'élément de sécurité 10 transmet notamment pendant cette étape 19 une URL au serveur 11, cette URL correspondant au motif de sa requête (simple mise à jour de données, activation de l'élément de sécurité 10 s'il s'agit de sa première utilisation,...).

Le problème de cette solution est qu'en général l'élément de sécurité 10 n'attend pas l'occurrence d'un événement pour venir interroger la plateforme OTA 11. Le « polling » s'effectue donc régulièrement, par exemple tous les quinze jours ou mensuellement et la plupart du temps la plateforme OTA 11 n'a rien à transmettre à l'élément de sécurité 10... Le demandeur a par exemple observé que dans 90% des interrogations de la plateforme OTA 11 par les éléments de sécurité 10 sur le terrain, aucune mise à jour ou programme ou donnée n'est à transmettre aux éléments de sécurité 10. Ceci se traduit par un trafic hertzien inutile et une surcharge de la plateforme OTA (une liaison TLS-PSK est instaurée entre l'élément de sécurité et la plateforme OTA à chaque interrogation de l'élément de sécurité). Les étapes 12 à 18, généralement référencées par 20 sont donc inutiles la plupart du temps.

Un autre problème est que la plate-forme OTA 11 est en permanence sollicitée pour des tâches diverses qui n'ont pas toutes le même degré d'urgence. Par exemple, il est plus important d'initialiser un élément de sécurité 10 (lorsque l'abonné l'insère pour la première fois dans un terminal) afin que l'abonné puisse rapidement passer des communications (télécharger son annuaire de correspondants par exemple ou télécharger un abonnement complet) plutôt que d'effectuer une mise à jour de son PLMN (Public Land Mobile Network - liste des réseaux étrangers auxquels l'élément de sécurité 10 se connectera de préférence en situation d'itinérance).

Il n'y a donc pas de distinction de traitement entre les requêtes qui sont urgentes et celles qui ne le sont pas. Le serveur OTA 11 peut alors être amené à rejeter des demandes de connexion émanant d'éléments de sécurité 10 qui ont un besoin urgent d'être mis à jour s'il est submergé d'autres requêtes moins urgentes provenant d'autres éléments de sécurité.

De plus, lorsqu'un réseau interne de centre de données est impliqué dans la mise à jour des éléments de sécurité (par exemple un centre de données d'un fabricant d'éléments de sécurité chez qui l'opérateur de téléphonie mobile aura localisé ses services), ce réseau sera lui aussi sollicité inutilement. Par ailleurs, lorsque ce réseau fait appel à des serveurs décentralisés physiquement, des communications supplémentaires viennent s'y ajouter.

Pour pallier à cet inconvénient de la seconde manière d'opérer, deux solutions sont possibles :
- Rallonger la période entre deux interrogations (« polling ») de la plateforme OTA (une application dans l'élément de sécurité est mise à jour pour rallonger cette période). L'inconvénient est que si des mises à jour sont disponibles juste après la dernière interrogation, l'élément de sécurité ne sera mis à jour que bien plus tard ;
- Passer en mode « push ». On retombe alors sur les problèmes mentionnés précédemment.

La présente invention a notamment pour objectif de remédier à ces inconvénients.

Plus précisément, l'invention concerne notamment un procédé de mise à jour d'éléments de sécurité coopérant avec des terminaux de télécommunications, les mises à jour étant effectuées par une plate-forme OTA sur la base de requêtes formulées par les éléments de sécurité, les éléments de sécurité transmettant à la plate-forme OTA des PSK-ID, le procédé consistant à transmettre des élément de sécurité à la plate-forme OTA des identités IDs définissant un ordre de priorité de demande de prise en compte de leurs requêtes par la plate-forme OTA.

Dans un mode de mise en oeuvre préférentiel, le procédé consiste à transmettre les PSK-ID à la plate-forme OTA par l'intermédiaire d'un serveur proxy.

Avantageusement, le serveur proxy filtre les requêtes en fonction des identités ID avant de les retransmettre à la plate-forme OTA si les identités ID ont un ordre de priorité supérieur à une valeur enregistrée dans le serveur proxy.

Préférentiellement, les identités IDs sont modifiables via OTA, afin de modifier les ordres de priorité, de rajouter des IDs et d'en supprimer.

L'invention concerne également un élément de sécurité coopérant avec un terminal de télécommunications, l'élément de sécurité étant agencé pour transmettre à une plate-forme distante un PSK-ID pour l'établissement d'un canal sécurisé entre l'élément de sécurité et la plate-forme distante, l'identité ID définissant un ordre de priorité de demande de prise en compte de sa requête par la plate-forme distante.

Dans un mode de réalisation avantageux, la plate-forme distante est une plate-forme OTA.

Dans un autre mode de réalisation, la plate-forme distante est un proxy placé entre l'élément de sécurité et une plate-forme OTA.

L'invention concerne également une plate-forme OTA destinée à administrer des éléments de sécurité coopérant avec des terminaux, les éléments de sécurité transmettant des requêtes de mise à jour à la plate-forme OTA, la plate-forme OTA comprenant des moyens d'administration des éléments de sécurité, la plate-forme comportant des moyens de filtrage des requêtes, les requêtes comprenant des PSK-ID dont les identités ID définissent un ordre de priorité de demande de prise en compte de leurs requêtes par la plate-forme OTA, les moyens de filtrage transmettant aux moyens d'administration des éléments de sécurité uniquement les requêtes dont les identités ID sont inférieures à une valeur de référence pour que les moyens d'administration administrent les éléments de sécurité qui en sont à l'origine.

D'autres caractéristiques et avantages de l'invention apparaîtront à la lecture de la description suivante de deux modes de mise en oeuvre préférentiels, donnés à titre illustratif et non limitatif, et des dessins annexés, dans lesquels :
- La figure 1 représente l'état de la technique ;
- La figure 2 représente un premier mode de mise en oeuvre de l'invention ;
- La figure 3 représente un second mode de mise en oeuvre de l'invention ;
- La figure 4 montre le fonctionnement de la présente invention dans le cas où une requête d'administration de l'élément de sécurité est rejetée ;
- La figure 5 représente une plate-forme OTA selon la présente invention.

La figure 1 a été décrite précédemment en référence à l'état de la technique.

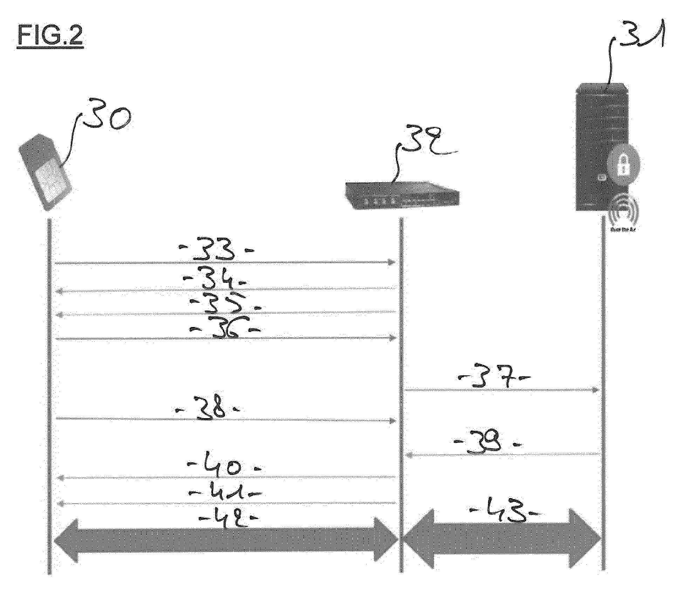

La figure 2 représente un premier mode de mise en oeuvre de l'invention.

Dans ce premier mode de mise en oeuvre, un élément de sécurité 30 vient interroger une plate-forme OTA 31 par l'intermédiaire d'un serveur proxy 32 pour lui demander si elle a des données à lui transmettre. Le terme « données » est ici entendu au sens large, il peut s'agir d'une transmission d'un programme, de données d'abonnement (IMSI/Ki pour un nouvel abonnement avec les domaines de sécurité et les clés correspondants) ou de simples mises à jour de données ou de programmes.

Les étapes 33 à 36 sont similaires aux étapes 12 à 15 de la figure 1, à savoir :
- L'élément de sécurité 30 contacte le serveur proxy 32 (étape 33) ;
- Le serveur proxy 32 lui répond (étape 34) ;
- Le serveur proxy 32 confirme sa réponse (étape 35) ;
- L'élément de sécurité 30 envoie un PSK-ID au serveur proxy 32 (étape 36).

La particularité de l'étape 36 est que l'identité ID de la clé PSK partagée entre l'élément de sécurité 30 et la plate-forme OTA 31 définit un ordre de priorité de demande de prise en compte de sa requête par ladite plate-forme OTA 31.

Pour chaque clé PSK d'un élément de sécurité, plusieurs identités IDs sont prévues, à chaque identité correspondant un ordre de priorité.

A titre d'exemple, si une clé PSK d'un élément de sécurité est 12345, cette même clé se voit affecter plusieurs identités. On aura donc par exemple les PSK-ID suivants :
- 12345-1
- 12345-2
- 12345-3
- 12345-N

Avec 1 étant l'ID le plus prioritaire et N l'ID le moins prioritaire. On entend par prioritaire une identité ID qui demande à la plate-forme OTA 31 que la demande émanant de l'élément de sécurité 30 soit traitée en priorité par rapport à des IDs d'ordres plus importants :
Une identité ID d'ordre de priorité 1 peut par exemple être relative à une demande de l'élément de sécurité d'être initialisé avec des paramètres d'opérateur pour une souscription d'abonnement. L'opérateur, via sa plate-forme OTA 31, traite alors cette demande (comme il sera vu par la suite) en priorité car elle présente pour l'abonné une importance toute particulière.

Une identité ID d'ordre 2 peut par exemple correspondre à une demande de téléchargement d'un annuaire téléphonique de l'abonné. Cette opération est moins cruciale que l'opération mentionnée ci-dessus.

Une identité ID d'ordre 3 peut correspondre à une demande de téléchargement d'une liste de réseaux préférés auquel l'élément de sécurité 30 viendra se connecter de préférence en situation d'itinérance.

Les IDs sont préférablement modifiables via OTA dans l'élément de sécurité 30. Ainsi, il est possible de modifier les ordres de priorité, de rajouter des IDs et d'en supprimer.

Le serveur proxy 32 a pour fonction d'effectuer un pré-filtrage des requêtes émanant des éléments de sécurité. Il peut être paramétré pour rejeter systématiquement les requêtes émanant d'éléments de sécurité ayant des IDs supérieurs à une valeur donnée. Il connaît pour cela l'état de charge de la plate-forme OTA 31 et filtre les demandes des éléments de sécurité en conséquence. S'il n'a pas connaissance de la charge de la plate-forme il peut la simuler en maintenant des statistiques relatives à son usage. Si une requête d'un élément de sécurité a une priorité (définie par son ID) suffisamment importante, le serveur proxy, lors d'une étape 37, transmet le PSK-ID reçu lors de l'étape 36 au serveur OTA 31.

Le serveur proxy 32 filtre donc les requêtes des éléments de sécurité en fonction des identités ID avant de les retransmettre à la plate-forme OTA 31 si les identités ID ont un ordre de priorité supérieur à une valeur enregistrée dans le serveur proxy 32. Le serveur proxy 32 permet donc d'éviter un trafic de données inutile provenant essentiellement de l'établissement de sessions TLS-PSK entre les éléments de sécurité qui viennent « poller » la plateforme OTA 31.

Lors d'une étape 38, l'élément de sécurité 30 choisit une suite de chiffrement, par exemple une suite AES 128 ou 3DES. Cette étape peut également précéder l'étape 37.

Si la plate-forme OTA 31 accepte (en fonction de son niveau de charge et de la priorité donnée à la requête de l'élément de sécurité) de donner suite à la requête formulée par l'élément de sécurité 30, celle-ci envoie, lors d'une étape 39, des clés de session au serveur proxy 32 qui les retransmet, lors d'une étape 40, à l'élément de sécurité 30.

A l'étape 41, le serveur proxy 32 finalise l'étape d'établissement d'une session TLS-PSK avec l'élément de sécurité qui peut alors dialoguer, par l'intermédiaire du serveur proxy 32, avec le serveur OTA 31 (étapes 42 et 43). Le serveur proxy 32 ne joue alors plus qu'un rôle de proxy (intermédiaire). Lors de ces étapes (42 et 43), l'élément de sécurité 30 transmet l'URL correspondant à sa demande (de même que lors de l'étape 19 de la figure 1).

Alternativement, après l'étape 33, le serveur proxy 32 peut interroger le serveur OTA 31 pour savoir s'il est occupé. Si c'est le cas, le serveur OTA l'en informe. Le serveur proxy 32 attend alors quelques instants pour réitérer sa demande, jusqu'à ce que le serveur OTA lui indique qu'il est disponible. Le serveur proxy 32 informe alors l'élément de sécurité, lors de l'étape 35, que celui-ci est prêt à accéder à sa demande (sous réserve que le PSK-ID qui lui sera transmis lors de l'étape 36 soit accepté par le serveur proxy 32 et la plate-forme OTA 31).

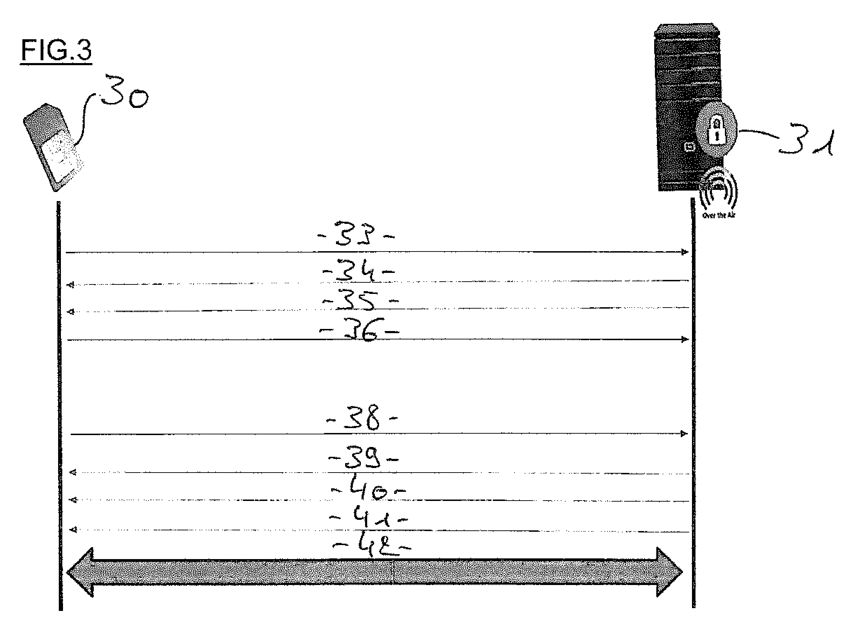

La figure 3 représente un second mode de mise en oeuvre de l'invention.

Dans ce mode de mise en oeuvre, l'élément de sécurité accède directement à la plate-forme OTA, sans l'intermédiaire d'un serveur proxy.

L'élément de sécurité 30 dialogue avec la plate-forme OTA 31 selon les étapes référencées en figure 2 à laquelle on se référera. Après avoir reçu, lors de l'étape 36, le PSK-ID de l'élément de sécurité 30, des moyens de filtrage compris dans la plate-forme OTA et qui seront décrits par la suite analysent l'identité ID de la requête et n'acceptent cette requête que si l'identité ID est inférieure à une valeur de référence pour que celle-ci administre l'élément de sécurité 30 qui en est à l'origine.

Ainsi, si par exemple l'identité ID transmis à la plate-forme 31 est égale à 2 et si la valeur de référence est égale à 3, la requête d'administration de l'élément de sécurité sera acceptée et la plate-forme 31 enverra des clés de session à l'élément de sécurité lors de l'étape 39. A contrario, si l'identité ID transmis à la plate-forme 31 est égale à 4 et si la valeur de référence est égale à 3, la requête d'administration de l'élément de sécurité sera rejetée (filtrée par les moyens de filtrage et non transmise aux éléments de la plate-forme qui ont pour fonction d'administrer l'élément de sécurité 30).

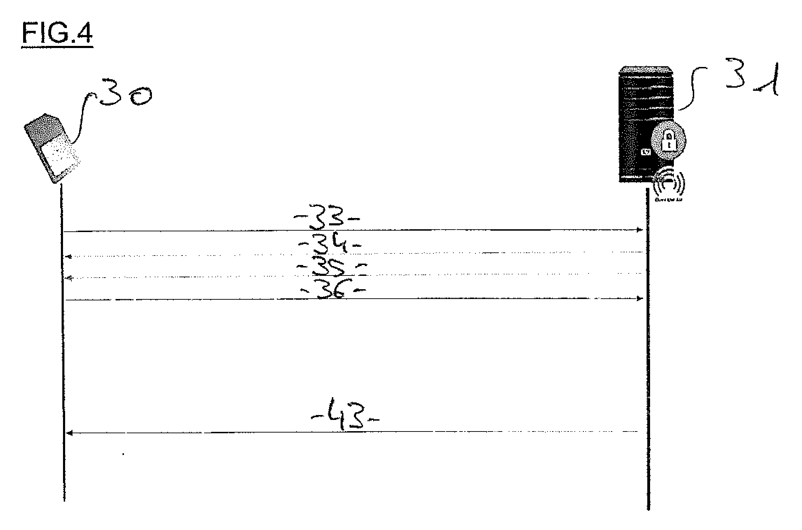

La figure 4 représente le cas où une requête d'administration de l'élément de sécurité est rejetée.

Dans cette figure, les étapes 33 à 36 sont identiques à celles des figures 2 et 3.

A la réception de l'identité ID à l'étape 36, les moyens de filtrage considèrent que les moyens d'administration des éléments de sécurité de la plate-forme OTA ne peuvent pas administrer l'élément de sécurité 30 et renvoient à cet élément de sécurité, lors d'une étape 43, un message lui indiquant un échec d'administration. L'élément de sécurité 30 attendra alors une future session de « polling » pour interroger la plate-forme OTA 31 (étape 33).

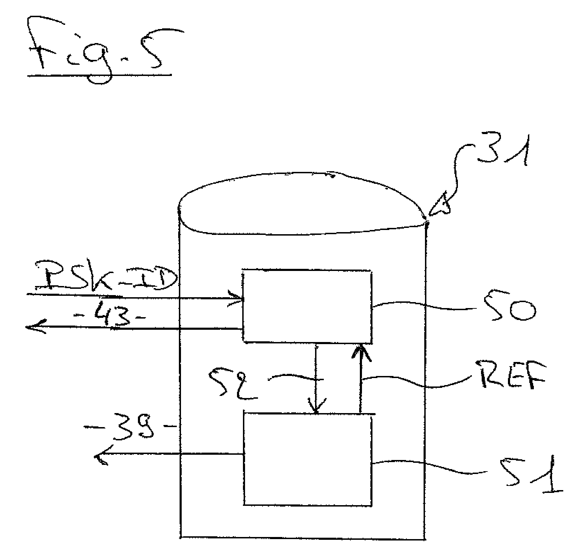

La figure 5 représente une plate-forme OTA conforme à la présente invention.

La plate-forme OTA 31 selon l'invention comporte des moyens de filtrage 50 et des moyens d'administration 51 des éléments de sécurité. Les moyens de filtrage reçoivent notamment les PSK-ID des éléments de sécurité, en extraient les identités IDs et vérifient si les identités reçues sont ou non inférieures (ou supérieures selon le cas) à une valeur de référence REF. La valeur de référence REF est par exemple fournie par les moyens d'administration 51 aux moyens de filtrage 50 en fonction de leur état de charge (de son activité).

La valeur de référence REF peut avantageusement être modifiée au niveau de l'administration de la plateforme OTA ou du proxy, par exemple pour diminuer cette valeur de référence pendant les périodes de pic de trafic (périodes de soldes par exemple) et l'augmenter lors des périodes de moindre trafic (la nuit par exemple).

Les moyens de filtrage 50 ne transmettent aux moyens d'administration 51 des éléments de sécurité que les requêtes dont les identités ID sont inférieures à la valeur de référence pour que ces moyens d'administration 51 administrent les éléments de sécurité qui en sont à l'origine. Ils ont donc une fonction de « firewall ».

A ce titre, si une identité ID reçue par les moyens de filtrage 30 est inférieure à la valeur de référence REF, la requête sera acceptée par les moyens de filtrage 50 qui transmettront, lors d'une étape 52, le PSK-ID reçu aux moyens d'administration 51 pour que ceux-ci envoient, lors de l'étape 39, des clés de session à l'élément de sécurité qui est à l'origine de ce PSK-ID. Dans le cas contraire, les moyens de filtrage 50 envoient à l'élément de sécurité le message lui indiquant un échec d'administration (voir l'étape 43 de la figure 4).

Les moyens de filtrage comprennent donc un simple comparateur de l'identité ID reçue avec la valeur de référence REF.

L'invention concerne également un élément de sécurité, tel qu'une carte SIM, UICC ou eUICC permettant de générer des IDs différents en fonction de ses propres besoins et/ou des besoins de son utilisateur.

Les besoins d'une UICC peuvent être détectés par exemple lorsque son détenteur l'insère pour la première fois dans un terminal et qu'elle ne contient pas d'abonnement définitif (elle ne contient qu'une application dite « bootstrap » lui permettant de se connecter à un réseau d'un opérateur ou à une plate-forme dédiée capable de lui fournir un abonnement complet à un opérateur). Une détection que l'élément de sécurité est à l'étranger peut également générer une demande automatique d'une liste de réseaux préférés.

Ces différents IDs sont stockés dans l'élément de sécurité et chaque ID définit un ordre de priorité de demande de prise en compte de sa requête par une plate-forme distante, cette plate-forme distante étant par exemple une plate-forme OTA (Fig. 3) ou un proxy (Fig. 2) placé entre l'élément de sécurité et la plate-forme OTA.

## Revendications

1. Procédé de mise à jour d'éléments de sécurité (30) coopérant avec des terminaux de télécommunications, lesdites mises à jour étant effectuées par une plate-forme OTA (31) sur la base de requêtes formulées par lesdits éléments de sécurité (30), lesdits éléments de sécurité (30) transmettant à ladite plate-forme OTA (31) des PSK-ID,
**caractérisé en ce qu'**il consiste à transmettre desdits élément de sécurité (30) à ladite plate-forme OTA (31) des identités IDs définissant un ordre de priorité de demande de prise en compte de leurs requêtes par ladite plate-forme OTA (31).

2. Procédé selon la revendication 1, **caractérisé en ce qu'**il consiste à transmettre lesdits PSK-ID à ladite plate-forme OTA (31) par l'intermédiaire d'un serveur proxy (32).

3. Procédé selon la revendication 2, **caractérisé en ce que** ledit serveur proxy (32) filtre lesdites requêtes en fonction desdites identités ID avant de les retransmettre à ladite plate-forme OTA (31) si les identités ID ont un ordre de priorité supérieur à une valeur enregistrée dans ledit serveur proxy (32).

4. Procédé selon l'une des revendications 1 à 3, **caractérisé en ce que** lesdites identités IDs sont modifiables via OTA (31), afin de modifier lesdits ordres de priorité, de rajouter des IDs et d'en supprimer.

5. Elément de sécurité (30) coopérant avec un terminal de télécommunications, ledit élément de sécurité (30) étant agencé pour transmettre à une plate-forme distante (31, 32) un PSK-ID pour l'établissement d'un canal sécurisé entre ledit élément de sécurité (30) et ladite plate-forme distante (31, 32), **caractérisé en ce que** l'identité ID définit un ordre de priorité de demande de prise en compte de sa requête par ladite plate-forme distante (31, 32).

6. Elément de sécurité (30) selon la revendication 5, **caractérisé en ce que** ladite plate-forme distante est une plate-forme OTA (31).

7. Elément de sécurité (30) selon la revendication 5, **caractérisé en ce que** ladite plate-forme distante est un proxy (32) placé entre ledit élément de sécurité (30) et une plate-forme OTA (31).

8. Plate-forme OTA (31) destinée à administrer des éléments de sécurité (30) coopérant avec des terminaux, lesdits éléments de sécurité (30) transmettant des requêtes de mise à jour à ladite plate-forme OTA (31), ladite plate-forme OTA (31) comprenant des moyens d'administration (51) desdits éléments de sécurité (30), **caractérisée en ce qu'**elle comporte des moyens de filtrage (50) desdites requêtes, lesdites requêtes comprenant des PSK-ID dont les identités ID définissent un ordre de priorité de demande de prise en compte de leurs requêtes par ladite plate-forme OTA (31), lesdits moyens de filtrage (50) transmettant auxdits moyens d'administration (51) desdits éléments de sécurité (30) uniquement les requêtes dont les identités ID sont inférieures à une valeur de référence pour que lesdits moyens d'administration (51) administrent les éléments de sécurité (30) qui en sont à l'origine.
